# EUROPEAN PATENT SPECIFICATION

(11) **EP 4 113 556 B1**
(45) Date of publication and mention of the grant of the patent: **20.09.2023**
(21) Application number: 21182750.6
(22) Date of filing: 30.06.2021
(51) Int. Cl.: H01G 11/06, H01G 11/78, H01G 11/80, H01G 11/82, H01M 50/147, H01M 4/04, H01M 10/04, H01M 10/052, H01M 10/054, H01M 50/103

(54) **LITHIUM/SODIUM ELECTROCHEMICAL DEVICE FOR STORING ELECTRICAL ENERGY IN RECTANGULAR GEOMETRIC CELLS**
LITHIUM/SODIUM ELEKTROCHEMISCHE VORRICHTUNG ZUR SPEICHERUNG ELEKTRISCHER ENERGIE IN RECHTECKIGEN GEOMETRISCHEN ZELLEN
DISPOSITIF LITHIUM/SODIUM ÉLECTROCHIMIQUE DE STOCKAGE D'ÉNERGIE ÉLECTRIQUE DANS DES CELLULES GÉOMÉTRIQUES RECTANGULAIRES

(43) Date of publication of application: 04.01.2023
(73) Proprietor: Mindcaps Smart Supercapacitors SL, 28020 Madrid (ES)
(72) Inventor: MERINO GONZALEZ, Camilo, 28020 Madrid (ES); NAVARRO ROMERO, Enrique, 28020 Madrid (ES)
(74) Representative: Pons

(56) References cited:
- JP-A- 2005 259 379
- US-A1- 2009 154 060
- US-A1- 2018 233 782

## Description

The invention covered in this descriptive report is an electrochemical device for storing electrical energy in rectangular geometric cells with a specific rectangular geometry, which allows the electrodes to be stacked vertically by the centre part of the electrode and include metal plates in the side chambers.
This way, both the electrodes and the metal are in contact with a current collector, and, depending on the connection, an electrochemical pre-metallisation process or charge transfer between electrodes can be carried out without opening the device for adding electrolytes.

The particular rectangular electrochemical cell geometry constitutes an embodiment that, in addition to being groundbreaking, significantly improves the energy efficiency of existing devices.
This device is valid for any type of electrochemical setting, be it batteries, super-capacitors or hybrids between the two.

### FIELD OF THE INVENTION

The industry sector of the invention is that of the electrical energy storage devices, especially, the manufacture of batteries, electrical capacitors or hybrid capacitors.

### BACKGROUND OF INVENTION

Geometric distribution is one of the parameters with the greatest impact on both the properties and the behaviour of energy storage devices.

Parameters such as the maximum distance between the ion flow and the current collector, or the distance between collectors have been shown to affect the electrochemical response of the device.

Other factors such as packing density, cell internal volume utilisation, internal resistance or thermal behaviour are also dependent on the device's geometry.

Long distances between electrodes have been shown to limit the mobility and spreading of ions by increasing electrical resistance, therefore, an optimal geometrical design that ensures proper electrochemical cell functioning is crucial.

Currently, the known state-of-the-art energy storage device designs are as follows:
- *Coin* or *Button* Cell Design: This type of device has a circular geometry of 10 mm in diameter and is mainly focused on research due to its easy handling, quick assembly and low cost.
   It has a positive electrode, a separator and a negative electrode.
   This type of devices do not contain any type of security venting and do not allow fast charging.
   Their main applications are medical implants, watches, hearing aids, car keys and memory storage devices.
- *Cylindrical* Cell Design: This packaging design is one of the most commonly used today. Some of its advantages are the simplicity of assembly and good mechanical stability.

The outer housing allows for high internal pressures without deformation.

This type of design has a single plate of both electrodes which, together with the separator, are wound inside a cylindrical housing. There are standard measurements for this type of cells, although they can be adapted to the desired size.

This type of design offers a long life cycle and is affordable.

However, they are bulky and have a low packing density, due to the chambers created when wounding the electrodes.

The most common applications for this type of devices are power tools, medical devices, or laptop computers.
- *Pouch* or *Prismatic* Cell Design: This design also consists of a single plate of both electrodes. It is the most widely used design in the industry, and the most popular design in hybrid and electric vehicles today. The plates are rolled into a flexible bag. This packaging improves the use of space compared to cylindrical cells; however, they are also more expensive to manufacture, less efficient in thermal management and have shorter life cycles. These cells must be temporarily added a "gas bag" on one side. The function of this complement is to collect the gases formed during the creation of the solid electrolyte interface in the first charging cycles. This type of design does not have standard dimensions and can be custom-made depending on the application.

In all said cases, the design or geometry changes, however, the concept is the same: Two single electrodes with a separator and two single collectors in contact with the exterior.

The current collectors are located at the end of the plate, this being the only point from which the energy provided by the cell can be drawn.

These systems pose several issues:
. - increased internal resistance of the cell.
. - in all these designs, the current collectors are perpendicular to the energy density flow created by the transport of ions between the two electrodes.

All these issues are solved by the rectangular geometric design proposed by this invention, which is technically built by current collectors that are two metal through rods passing through all the electrodes.

The collectors go in the same direction as the ion flow between anode and cathode.

In addition, the contact between the collectors and the electrodes is individually direct with each of them ensuring even current distribution. This significantly decreases internal resistance and, therefore, the current drawn from the device is higher. Document US2009154060A1; document US2018233782A1 and document JP2005259379A disclose parallelepiped capacitors or battery cells having stacked electrodes and with at least one rod to form lead wires or current collectors.

### SUMMARY OF THE INVENTION

The invention referred to in this description is an electrochemical device for storing electrical energy in rectangular geometric cells with a specific rectangular geometry, called narrow stack geometry as define in claim 1, which allows electrodes to be stacked vertically by their centre part and include metal plates in the side chambers.

Therefore, both, the electrodes and the metal are in contact with a current collector, and, depending on the connection, an electrochemical pre-metallisation process or charge transfer between electrodes can be carried out.

The particular rectangular electrochemical cell geometry constitutes an embodiment that, in addition to being groundbreaking, significantly improves the energy efficiency of existing devices.

The geometry proposed by this invention is intended to solve this problem by incorporating, within it, a space intended for deposition of the metal in case external metallisation is necessary. Therefore, within the cell volume, both the main electrodes and the metal can be included.

Currently, using carbonaceous materials of high porosity, but there is a problem of capacity loss of the devices caused by the formation of the solid electrolyte interface (SEI).

This problem is solved by metallising the anode. To carry out this process, it is necessary to connect the anodic material with the metal through an external circuit. With the existing electrochemical cell designs, this anode metallisation must be performed at a stage outside the formation stage since, inside the cell, there is only room for two electrodes.

Furthermore, if external metallisation is required, we only need to connect the external electrical circuit to the metal and to the electrode to be metallised. This process removes the loss of capacity caused by the formation of the solid-electrolyte interface since, once this layer has been formed, the external electrical circuit connects the main electrodes to each other and begin to perform charge and discharge cycles.

Another benefit offered by this cell design is the way the electrical current is drawn. Generally, the current collector is in contact with one end of the electrode and exits outward in a direction perpendicular to the ion flow.

This time, the current collectors are two metal through rods that go through all the electrodes. The collectors go in the same direction as the ion flow between anode and cathode.

In addition, the contact between the collectors and the electrodes is individually direct with each of them ensuring even current distribution.

This significantly decreases internal resistance and, therefore, the current drawn from the device is higher.

### DESCRIPTION OF DRAWINGS

In order to complement the description being made and in order to assist a better understanding of the features of the invention, two sheets of drawings are added to this descriptive report, as an integral part thereof, in which elements are indicated with identical references and where, including but not limited to, the following has been represented:

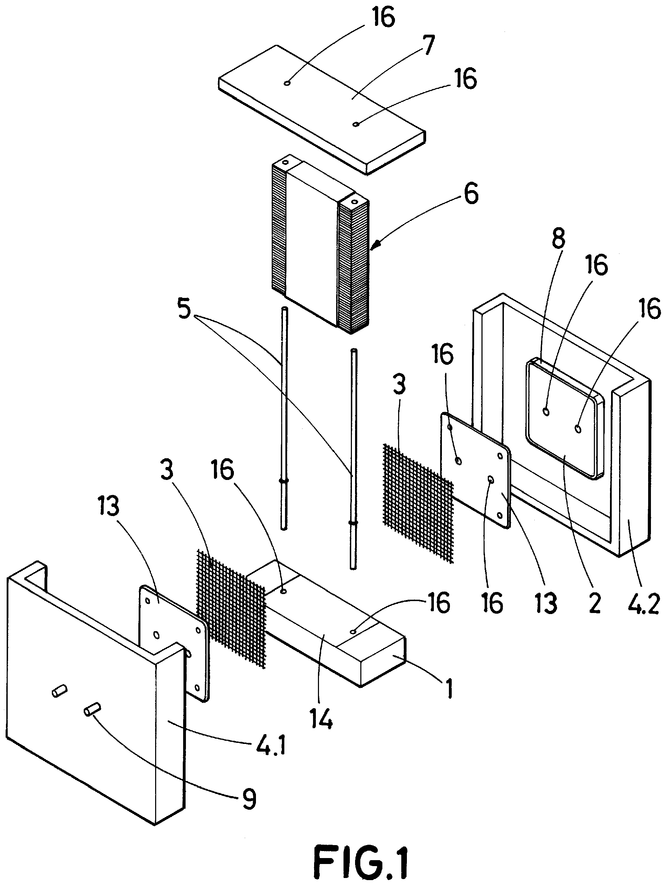

**FIGURE 1****.-** Cut-off view of the device and its component parts

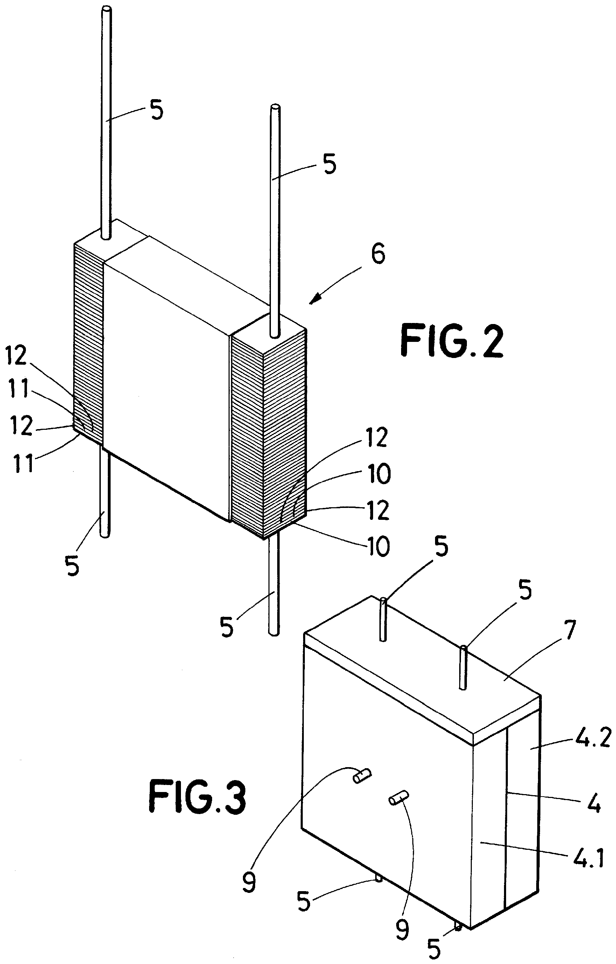

**FIGURE 2****.-** Isometric view of the geometric arrangement of vertically stacked electrodes, and through rods. (Narrow stack geometry).
**FIGURE 3****.- Isometric** view of the mounted device

And in these figures, the same elements are identified with identical numbering:
(1). - backbone structure,
(2). -, metal plate
(3), - metal support grid
(4). - hermetic and robust housing.
(4.1). - front side,
(4.2). - rear side
(5). - hollow metal through rods,
(6). - electrode stack,
(7). - top cover of the container,
(8). - metal chamber,
(9). - electrode connection,
(10). - positive electrode,
(11). - negative electrode,
(12). - separating paper,
(13).- metal-ion sheet,
(14).- metal substrate
(16).- through holes.

### PREFERRED EMBODIMENT OF THIS INVENTION

The invention referred to in this descriptive report is an electrochemical device for storing electrical energy by means of a new arrangement of rectangular geometric cells, called the narrow stack geometry, that allows the electrodes to be stacked vertically in their centre part.

In a preferred embodiment, the electrochemical device for storing electrical energy in rectangular geometric cells, is formed from a robust straight rectangular parallelepiped-shaped housing (4), which can be hermetically sealed and which will house the rest of the components.

Said robust housing (4) is formed by a base (1), two front and rear sides (4.1 and (4.2) and a cover (7).

On the base (1), hollow metal rods run through the holes (16) at the ends thereof (5).

The function of said metal through rods (5) is to serve as current collectors and the electrodes will be deposited on a metal substrate (14). In addition, and as an important function, said hollow metal rods (5) will serve as a means for cooling the assembly, such that air or coolant fluid may circulate inside the assembly.

The electrodes would be deposited always following the same sequence:
On the hollow metal rod (5) the positive electrode is inserted, then the separating element (which can be paper), the positive electrode-separating element and so on.

On the other hollow metal rod (5) the negative electrode is inserted, then the separating element (which can be paper), the negative electrode-separating element and so on.

More or fewer electrodes can be stacked depending on their thickness, and this device can overlap a large number of electrodes in a reduced space, ensuring high performance.

All electrodes will be deposited on a metal substrate (14) and, depending on the material used, will serve as an anode or cathode of the device.

The electrodes acting as anodes are always inserted on the same rod and all the flaps would be on the same side; those acting as cathodes are inserted, all of them, on the opposite rod. This way, one of the rods will interconnect all the anodes and the other all the cathodes.
- The Stack of electrodes (6) thus built, is what constitutes the so-called "narrow stack" geometry and would fit into the base (1) forming the central structure of the device.
   - On the two sides (4.1) and (4.2) and on the inner part thereof there is a chamber (8) in which a metal plate (2) is incorporated, and on such metal plate, goes a metal-ion sheet (13) suitable for this type of devices, such as lithium, sodium, or any type of metal suitable for an energy storage device. A grid (3) is used to secure the metal-ion sheet (13).

The grid (3) serves as a support for said metal-ion sheet (13) and, at the same time, prevents the metal sheet (2) from falling off and creating a potential short circuit in the device when it comes into direct contact with one of the electrodes of the central stack.

Likewise, the grid (3) is used to press it against the metal plate (2) incorporated within the chamber (8), which will be in contact with one of the external collectors (9). Thus, when an electric current is applied to one of the baseline collectors (9), an even current distribution will be generated up to the metal-ion sheet, and it will come into operation inside the device.

The grid (3) is screwed to the metal plate (2) by the four holes on the edges of the corners and the metal-ion sheet (13) is locked between the two holes.

The two central holes in the metal plate (2) serve to make the external connection (9) of the metal-ion sheet (13). This connection can be carried out, either with a through screw, a pin, or any other element, provided that it is metallic.
- Once the metal-ion sheets (13) have been incorporated into the side covers (4.1) and (4.2) the device, the two side covers must be sealed, and the central structure of the device, which includes the stack and the metal through rods (5), must be fitted inside. All of this must be done in an inert atmosphere to prevent metal-ion oxidation.
   - Finally, the electrolyte is incorporated and the top cover (7) sealed,
   all this also in an inert atmosphere.

Both, the side covers (4.1) and (4.2) the top cover (7) must be of a material resistant to oxidizing conditions and with good mechanical resistance, to avoid deformations and high pressures.

The material can be plastic or any other type of material that fulfils these expectations, although it is advisable that it is not an electric conductor, to prevent contact between the two metal rods (5), either between them or with the side collectors (9), which may cause a potential short circuit, preventing the operation of the device.

The connections for the operation of the device are as follows:
- The electrode stack (6) with rectangular narrow stack geometry, allows carrying
out the pre-metallisation stage, necessary to create the SEI, and the subsequent cycling stage in the same device, without reopening it.

Generally, it is necessary to carry out the pre-metallisation stage, and then open the device to incorporate more electrolyte, since part of it is consumed in this phase, and there are no devices that allow connecting baseline electrodes to carry out this phase.

The collectors (9) located on the side covers (4.1) and (4.2) enable the pre-metallisation stage to be carried out, acting as a negative current collector.

In this case, the collectors (9) must be connected to the negative pole of a voltage source and the metal rod (5), which interconnects all the electrodes that will serve as anodes of the device, to the positive pole of the current. This way, a process of ion intercalation occurs in the structure of the anode material, which will result in the creation of a solid-electrolyte interface (SEI).

When this phase is completed, it is not necessary to open the device as in the existing energy storage devices, but it is possible to directly connect the anode and the cathode of the device by means of the through rods (5) so that a charge and discharge cycling process takes place between them.

In this case, the metal rod (5) that interconnects all the electrodes serving as an anode, will be connected to the negative pole of the voltage source, and the metal rod (5) that interconnects all the electrodes serving as a cathode, shall be connected to the positive pole of the voltage source.

It is also possible to make an auxiliary connection to any of the collectors (9) to monitor the internal behaviour of the device, with respect to that baseline electrode.

This type of narrow stack setting is valid for any type of energy storage devices (batteries, electric capacitors or hybrid capacitors).

Having sufficiently described the nature of the invention, as well as the manner of its implementation, it should be noted that the provisions set out above and represented in the attached drawings are subject to change in detail, as long as they do not alter their fundamental principles set out in the preceding paragraphs and summarised in the following claims.

## Claims

1. Electrochemical device for storing electrical energy in rectangular geometric cells, narrow stack geometry, comprising:
a straight sturdy rectangular parallelepiped-shaped housing (4) made of a material resistant to oxidizing conditions with good mechanical strength, and which is hermetically sealed,
an electrode stack (6) with rectangular narrow stack geometry housed inside the housing (4), comprising
a stack of positive electrodes (10) inserted on one metal rod (5) following the sequence:
a positive electrode (10)
a positive electrode separating element (12)
a stack of negative electrodes (11) inserted on another metal rod (5) following the sequence
a negative electrode (11)
a negative electrode-separating element (12)
**characterized in that**
said housing (4) comprises a base (1) provided with a metal substrate (14) fitted with through holes (16), a cover (7), a front side (4.1), a rear side (4.2), wherein each of said front and rear sides (4.1, 4.2) is provided with an inner chamber (8),
the metal rods (5) are hollow rods that serve as current collectors and as means for cooling, which run over the metal substrate (14) of the base (1) and through its through holes (16),
and wherein the electrochemical device further comprises:
two metal plates (2) fitted with central holes (16), wherein each metal plate (2) is incorporated in each inner chamber (8) of each side (4.1, 4.2),
two metal-ion sheets (13),
two grids (3), each one screwed to each of the metal plates (2) holding one of the metal-ion sheets (13) between them, and
metal external connections (9) that connect with the metal-ion sheets (13) through the central holes (16) of the metal plates (2).

2. Electrochemical device for storing electrical energy in rectangular geometric cells, narrow stack geometry, according to claim claim 1, wherein the metal-ion sheet (13) is featuring in lithium, sodium, or any type of metal suitable for an energy storage device.

3. Electrochemical device for storing electrical energy in rectangular geometric cells, narrow stack geometry, according to claim 1 and wherein the electrodes serving as anodes, are always inserted on the same rod, remaining all flaps on the same side, and those serving as cathodes are inserted, all of them, on the opposite rod, so that one of the rods will interconnect all anodes and the other all cathodes.

4. Electrochemical device for storing electrical energy in rectangular geometric cells, narrow stack geometry, according to claim 1 and wherein the grid (3) presses the metal- ion sheet (13) against the metal plate (2) built into the chamber (8), which is in contact with one of the external collectors (9), so that when applying an electrical current to one of the baseline collectors (9), an even current distribution is generated up to the metal- ion sheet (13), and the sheet will come into operation inside the device, with the grid (3) screwed to the metal plate (2) by the four holes present at the edges of the corners, between which the metal-ion sheet is clamped (13).

5. Electrochemical device for storing electrical energy in rectangular geometric cells, narrow stack geometry, according to claim 1 wherein, the two central holes in the metal plate (2), serving to make the external connection (9) of the metal-ion sheet (13) and this connection is made by means of a through screw, a pin, or any other similar metallic element.

6. Electrochemical device for storing electrical energy in rectangular geometric cells, narrow stack geometry, according to the above claims wherein once metal-ion sheets (13) are incorporated into the side covers (4.1) and (4.2) of the device, these covers are sealed by fitting inside them, the central structure of the device, which includes the stack and metal through rods (5), in an inert atmosphere to prevent oxidation of the metal-ion plate (13), and finally, the electrolyte and seal the top cover (7), all also in an inert atmosphere.

7. Electrochemical device for storing electrical energy in rectangular geometric cells, narrow stack geometry, according to the above claims wherein such geometry, allows carrying out the pre-metallisation stage, necessary to create the Solid Electrolyte Interface (SEI) and the subsequent cycling stage in the same device, without the need to reopen it, since the collectors (9) located on the side covers (4.1) and (4.2) allow the pre-metallisation stage to be carried out, serving as a negative current collector, and the collectors (9) must be connected to the negative pole of a voltage source, and the metal through rod (5), which interconnects all the electrodes that will serve as anodes of the device, to the positive pole of the current, producing an ion intercalation process in the structure of the anode material, which will result in the creation of a solid-electrolyte interface (SEI), the anode and cathode of the device being connected directly by the through rods (5) so that a charging and discharging cycle process takes place between the two.

8. Electrochemical device for storing electrical energy in rectangular geometric cells, narrow stack geometry, according to the above claims and characterised that in the opposite case of the previous one, the metal rod (5) interconnecting all the electrodes serving as cathodes, will be connected to the positive pole of the voltage source.

9. Electrochemical device for storing electrical energy in rectangular geometric cells, narrow stack geometry, according to the above claims and characterised that to carry out a monitoring of the internal behaviour of the device, an auxiliary connection is made to any of the collectors (9).

10. Electrochemical device for storing electrical energy in rectangular geometric cells, narrow stack geometry, according to the above claims wherein this narrow stack geometry setting is suitable for any type of energy storage device.

11. Electrochemical device for storing electrical energy in rectangular geometric cells, narrow stack geometry, according to the above claims wherein the hollow metal rods (5) will serve as a means to cool the assembly when circulating through its hollow interior air or cooling fluid.

## Patentansprüche

1. Elektrochemische Vorrichtung zum Speichern von elektrischer Energie in rechteckigen geometrischen Zellen, schmale Stapelgeometrie, die Folgendes umfasst:
ein gerades stabiles rechteckiges parallelepipedförmiges Gehäuse (4), das aus einem Material besteht, das gegenüber oxidierenden Bedingungen resistent ist, eine gute mechanische Festigkeit aufweist und hermetisch abgedichtet ist,
einen Elektrodenstapel (6) mit einer rechteckigen schmalen Stapelgeometrie, der im Gehäuse (4) untergebracht ist und Folgendes umfasst
einen Stapel positiver Elektroden (10), die auf eine Metallstange (5) gesteckt sind und der folgenden Reihenfolge folgen:
eine positive Elektrode (10)
ein eine positive Elektrode trennendes Element (12)
einen Stapel negativer Elektroden (11), die auf eine andere Metallstange (5) gesteckt sind und der folgenden Reihenfolge folgen
eine negative Elektrode (11)
ein eine negative Elektrode trennendes Element (12)
**dadurch gekennzeichnet, dass**
das Gehäuse (4) eine Basis (1), die mit einem Metallsubstrat (14) mit Durchgangslöchern (16) versehen ist, eine Abdeckung (7), eine Vorderseite (4.1), eine Rückseite (4.2) umfasst, wobei jede der Vorder- und der Rückseite (4.1, 4.2) mit einer inneren Kammer (8) versehen ist,
die Metallstangen (5) hohle Stangen sind, die als Stromkollektoren und als Mittel zum Kühlen fungieren, die über das Metallsubstrat (14) der Basis (1) und durch dessen Durchgangslöcher (16) verlaufen,
und wobei die elektrochemische Vorrichtung ferner Folgendes umfasst:
zwei Metallplatten (2) mit zentralen Löchern (16), wobei jede Metallplatte (2) in jede innere Kammer (8) jeder Seite (4.1, 4.2) integriert ist,
zwei Metallionenbleche (13),
zwei Gitter (3), von denen jedes in jede der Metallplatten (2) geschraubt ist, die eines der Metallionenbleche (13) zwischen sich halten, und
externe Metallverbindungen (9), die durch die zentralen Löcher (16) der Metallplatten (2) mit den Metallionenblechen (13) verbunden sind.

2. Elektrochemische Vorrichtung zum Speichern von elektrischer Energie in rechteckigen geometrischen Zellen, schmale Stapelgeometrie, nach Anspruch 1, wobei das Metallionenblech (13) Lithium, Natrium oder eine beliebige Art Metall aufweist, das für eine Energiespeichervorrichtung geeignet ist.

3. Elektrochemische Vorrichtung zum Speichern von elektrischer Energie in rechteckigen geometrischen Zellen, schmale Stapelgeometrie, nach Anspruch 1 und wobei die Elektroden, die als Anoden fungieren, immer auf dieselbe Stange gesteckt sind, wobei alle Klappen auf derselben Seite verbleiben, und jene, die als Katoden fungieren, sämtlich auf die gegenüberliegende Stange gesteckt sind, derart, dass eine der Stangen alle Anoden miteinander verbindet und die andere alle Katoden.

4. Elektrochemische Vorrichtung zum Speichern von elektrischer Energie in rechteckigen geometrischen Zellen, schmale Stapelgeometrie, nach Anspruch 1 und wobei das Gitter (3) das Metallionenblech (13) gegen die in die Kammer (8) eingebaute Metallplatte (2) drückt, die mit einem der externen Kollektoren (9) in Kontakt ist, derart, dass, wenn an einen der Basislinienkollektoren (9) ein elektrischer Strom angelegt wird, bis zum Metallionenblech (13) eine gleichmäßige Stromverteilung erzeugt wird und das Blech in der Vorrichtung in Betrieb gesetzt wird, wobei das Gitter (3) über die vier Löcher an den Kanten der Ecken, zwischen die das Metallionenblech (13) geklemmt ist, an die Metallplatte (2) geschraubt ist.

5. Elektrochemische Vorrichtung zum Speichern von elektrischer Energie in rechteckigen geometrischen Zellen, schmale Stapelgeometrie, nach Anspruch 1, wobei die zwei zentralen Löcher in der Metallplatte (2) der Herstellung der externen Verbindung (9) des Metallionenblechs (13) dienen und diese Verbindung mittels einer Durchgangsschraube, eines Stifts oder eines beliebigen anderen ähnlichen Metallelements hergestellt wird.

6. Elektrochemische Vorrichtung zum Speichern von elektrischer Energie in rechteckigen geometrischen Zellen, schmale Stapelgeometrie, nach den vorstehenden Ansprüchen, wobei, nachdem die Metallionenbleche (13) in die Seitenabdeckungen (4.1) und (4.2) der Vorrichtung eingesetzt sind, diese Abdeckungen durch Einsetzen der zentralen Struktur der Vorrichtung, die den Stapel und Durchgangsstangen (5) aus Metall beinhaltet, in einer trägen Atmosphäre abgedichtet werden, um eine Oxidation der Metallionenplatte (13) zu verhindern, und schließlich den Elektrolyt beinhaltet und die obere Abdeckung (7) abdichtet, alle ebenfalls in einer trägen Atmosphäre.

7. Elektrochemische Vorrichtung zum Speichern von elektrischer Energie in rechteckigen geometrischen Zellen, schmale Stapelgeometrie, nach den vorstehenden Ansprüchen, wobei eine derartige Geometrie das Durchführen der Vormetallisierungsstufe, die zum Herstellen der soliden Elektrolytschnittstelle (SEI) erforderlich ist, und der nachfolgenden Zyklisierungsstufe in derselben Vorrichtung erlaubt, ohne dass sie erneut geöffnet werden muss, da die Kollektoren (9), die sich an den Seitenabdeckungen (4.1) und (4.2) befinden, die Durchführung der Vormetallisierungsstufe erlauben, die als negative Stromkollektoren fungieren, und die Kollektoren (9) mit dem negativen Pol einer Spannungsquelle verbunden sein müssen und die Durchgangsstange (5) aus Metall, die alle Elektroden miteinander verbindet, die als Anoden der Vorrichtung fungieren, mit dem positiven Pol des Stroms, wodurch ein Prozess der Ioneneinfügung in die Struktur des Anodenmaterials produziert wird, was in der Herstellung einer soliden Elektrolytschnittstelle (SEI) resultiert, wobei die Anode und die Katode der Vorrichtung direkt über die Durchgangsstangen (5) verbunden sind, derart, dass ein Lade- und Entladezyklusprozess zwischen den beiden erfolgt.

8. Elektrochemische Vorrichtung zum Speichern von elektrischer Energie in rechteckigen geometrischen Zellen, schmale Stapelgeometrie, nach den vorstehenden Ansprüchen und **dadurch gekennzeichnet, dass** in dem dem vorherigen entgegengesetzten Fall die Metallstange (5), die alle als Katoden fungierenden Elektroden miteinander verbindet, mit dem positiven Pol der Spannungsquelle verbunden wird.

9. Elektrochemische Vorrichtung zum Speichern von elektrischer Energie in rechteckigen geometrischen Zellen, schmale Stapelgeometrie, nach den vorstehenden Ansprüchen und **dadurch gekennzeichnet, dass** zum Ausführen einer Überwachung des internen Verhaltens der Vorrichtung eine Hilfsverbindung zu einem der Kollektoren (9) hergestellt wird.

10. Elektrochemische Vorrichtung zum Speichern von elektrischer Energie in rechteckigen geometrischen Zellen, schmale Stapelgeometrie, nach den vorstehenden Ansprüchen, wobei diese schmale Stapelgeometrieeinstellung für jede Art einer Energiespeichervorrichtung geeignet ist.

11. Elektrochemische Vorrichtung zum Speichern von elektrischer Energie in rechteckigen geometrischen Zellen, schmale Stapelgeometrie, nach den vorstehenden Ansprüchen, wobei die hohlen Metallstangen (5) als Mittel zum Kühlen der Anordnung fungieren, wenn Luft oder ein Kühlfluid durch das Innere zirkuliert.

## Revendications

1. Dispositif électrochimique destiné à stocker de l'énergie électrique dans des cellules géométriques rectangulaires, de géométrie de pile étroite, comprenant :
un logement (4) de forme parallélépipédique rectangulaire solide droit constitué d'un matériau résistant aux conditions oxydantes avec une bonne résistance mécanique, et qui est hermétiquement scellé,
une pile d'électrodes (6) avec une géométrie de pile étroite rectangulaire logée à l'intérieur du logement (4), comprenant
une pile d'électrodes positives (10) insérées sur une tige métallique (5) suivant la séquence :
une électrode positive (10)
un élément de séparation d'électrodes positives (12)
une pile d'électrodes négatives (11) insérées sur une autre tige métallique (5) suivant la séquence
une électrode négative (11)
un élément de séparation d'électrodes négatives (12)
**caractérisé en ce que**
ledit logement (4) comprend une base (1) pourvue d'un substrat métallique (14) muni de trous traversants (16), un couvercle (7), un côté avant (4.1), un côté arrière (4.2), dans lequel chacun desdits côtés avant et arrière (4.1, 4.2) est pourvu d'une chambre interne (8),
les tiges métalliques (5) sont des tiges creuses qui servent de collecteurs de courant et de moyens de refroidissement, qui courent sur le substrat métallique (14) de la base (1) et à travers ses trous traversants (16),
et dans lequel le dispositif électrochimique comprend en outre :
deux plaques métalliques (2) munies de trous centraux (16), dans lequel chaque plaque métallique (2) est incorporée dans chaque chambre interne (8) de chaque côté (4.1, 4.2),
deux feuilles d'ions métalliques (13),
deux grilles (3), chacune vissée à chacune des plaques métalliques (2) maintenant l'une des feuilles d'ions métalliques (13) entre elles, et
des connexions externes métalliques (9) qui se connectent aux feuilles d'ions métalliques (13) à travers les trous centraux (16) des plaques métalliques (2).

2. Dispositif électrochimique destiné à stocker de l'énergie électrique dans des cellules géométriques rectangulaires, de géométrie de pile étroite, selon la revendication 1, dans lequel la feuille d'ions métalliques (13) est constituée de lithium, sodium, ou d'un quelconque type de métal approprié pour un dispositif de stockage d'énergie.

3. Dispositif électrochimique destiné à stocker de l'énergie électrique dans des cellules géométriques rectangulaires, de géométrie de pile étroite, selon la revendication 1 et dans lequel les électrodes servant d'anodes, sont toujours insérées sur la même tige, restant toutes volets sur le même côté, et celles servant de cathodes sont insérées, toutes, sur la tige opposée, de sorte que l'une des tiges interconnectera toutes les anodes et l'autre toutes les cathodes.

4. Dispositif électrochimique destiné à stocker de l'énergie électrique dans des cellules géométriques rectangulaires, de géométrie de pile étroite, selon la revendication 1 et dans lequel la grille (3) presse la feuille d'ions métalliques (13) contre la plaque métallique (2) intégrée dans la chambre (8), qui est en contact avec l'un des collecteurs externes (9), de sorte que lors de l'application d'un courant électrique à l'un des collecteurs de la ligne de base (9), une distribution de courant uniforme est générée jusqu'à la feuille d'ions métalliques (13), et la feuille entrera en fonctionnement à l'intérieur du dispositif, avec la grille (3) vissée à la plaque métallique (2) par les quatre trous présents au niveau des bords des coins, entre lesquels la feuille d'ions métalliques est serrée (13).

5. Dispositif électrochimique destiné à stocker de l'énergie électrique dans des cellules géométriques rectangulaires, de géométrie de pile étroite, selon la revendication 1 dans lequel, les deux trous centraux dans la plaque métallique (2), servant à réaliser la connexion externe (9) de la feuille d'ions métalliques (13) et cette connexion est faite au moyen d'une vis traversante, d'une épingle, ou d'un quelconque autre élément métallique similaire.

6. Dispositif électrochimique destiné à stocker de l'énergie électrique dans des cellules géométriques rectangulaires, de géométrie de pile étroite, selon les revendications ci-dessus dans lequel une fois les feuilles d'ions métalliques (13) incorporées dans les couvercles latéraux (4.1) et (4.2) du dispositif, ces couvercles sont scellés en s'adaptant à l'intérieur de celles-ci, la structure centrale du dispositif, qui comprend la pile et les tiges traversantes métalliques (5), dans une atmosphère inerte pour empêcher l'oxydation de la plaque d'ions métalliques (13), et finalement, l'électrolyte et sceller le couvercle supérieur (7), le tout également dans une atmosphère inerte.

7. Dispositif électrochimique destiné à stocker de l'énergie électrique dans des cellules géométriques rectangulaires, de géométrie de pile étroite, selon les revendications ci-dessus dans lequel une telle géométrie, permet de réaliser l'étape de pré-métallisation, nécessaire pour créer l'interface d'électrolyte solide (SEI) et l'étape de cyclage ultérieure dans le même dispositif, sans besoin de le réouvrir, puisque les collecteurs (9) situés sur les couvercles latéraux (4.1) et (4.2) permettent de réaliser l'étape de pré-métallisation, servant de collecteur de courant négatif, et les collecteurs (9) doivent être connectés au pôle négatif d'une source de tension, et la tige traversante métallique (5), qui interconnecte toutes les électrodes qui serviront d'anodes du dispositif, au pôle positif du courant, produisant un processus d'intercalation d'ions dans la structure du matériau d'anode, qui se traduira par la création d'une interface solide-électrolyte (SEI), l'anode et la cathode du dispositif étant connectées directement par les tiges traversantes (5) de sorte qu'un processus de cycle de charge et de décharge a lieu entre les deux.

8. Dispositif électrochimique destiné à stocker de l'énergie électrique dans des cellules géométriques rectangulaires, de géométrie de pile étroite, selon les revendications précédentes et **caractérisé en ce que** dans le cas opposé du précédent, la tige métallique (5) interconnectant toutes les électrodes servant de cathodes, sera connectée au pôle positif de la source de tension.

9. Dispositif électrochimique destiné à stocker de l'énergie électrique dans des cellules géométriques rectangulaires, de géométrie de pile étroite, selon les revendications précédentes et **caractérisé en ce que** pour réaliser une surveillance du comportement interne du dispositif, une connexion auxiliaire est faite à l'un quelconque des collecteurs (9).

10. Dispositif électrochimique destiné à stocker de l'énergie électrique dans des cellules géométriques rectangulaires, de géométrie de pile étroite, selon les revendications ci-dessus dans lequel ce paramétrage de géométrie de pile étroite est approprié pour un quelconque type de dispositif de stockage d'énergie.

11. Dispositif électrochimique destiné à stocker de l'énergie électrique dans des cellules géométriques rectangulaires, de géométrie de pile étroite, selon les revendications ci-dessus dans lequel les tiges métalliques creuses (5) serviront de moyen pour refroidir l'ensemble lors de la circulation à travers son intérieur creux d'air ou de fluide de refroidissement.
